# EUROPEAN PATENT APPLICATION

(11) **EP 4 686 733 A1**
(43) Date of publication of application: **04.02.2026**
(21) Application number: 25179058.0
(22) Date of filing: 27.05.2025
(51) Int. Cl.: C08J 9/32, B29C 67/20, B29C 70/66

(54) **SYNTACTIC-FOAM PARTS WITH ELONGATED MEMBERS**

(30) Priority: 30.07.2024 US 202418789044
(71) Applicant: The Boeing Company, Arlington, VA 22202 (US)
(72) Inventor: WILENSKI, Mark, Arlington, 22202 (US); GREGERSEN, Kimberly-Alice, Arlington, 22202 (US)
(74) Representative: Boult Wade Tennant LLP

(57) **Abstract**

Examples of the present disclosure include an apparatus that includes a syntactic-foam part. The syntactic-foam part includes low-density spheres at least partially embedded in a resin. The syntactic-foam part includes an elongated member partially embedded in the resin and including a first end and a second end. At least the first end is located relative to the syntactic-foam part such that the first end is exposed to an exterior of the syntactic-foam part at an exterior surface of the syntactic-foam part.

## Description

### FIELD

This disclosure relates generally to buoyancy foams, and more particularly to syntactic-foam parts with elongated members.

### BACKGROUND

Buoyancy foams are incorporated into parts to promote buoyancy of the part within a higher density fluid. Some parts that incorporate buoyancy foams include, but are not limited to, submarines, watercraft, oil drilling rigs and components, and other marine-based systems. Typical buoyancy foams are compression resistant and, in some cases, water resistant, durable, and reliable. Making buoyancy foams that have these characteristics, using an efficient, a cost-effective, and a reliable manufacturing process, can be difficult.

### SUMMARY

The subject matter of the present application has been developed in response to the present state of the art, and in particular, in response to the shortcomings of conventional buoyancy foams and conventional methods of making such buoyancy foams, that have not yet been fully solved by currently available techniques. Accordingly, the subject matter of the present application has been developed to provide syntactic-foam parts and corresponding methods of making such parts that overcome at least some of the above-discussed shortcomings of prior art techniques.

The following is a non-exhaustive list of examples, which may or may not be claimed, of the subject matter, disclosed herein.

The subject matter of the following paragraph constitutes example 1 of the present disclosure. According to example 1, an apparatus includes a syntactic-foam part. The syntactic-foam part includes low-density spheres at least partially embedded in a resin. The syntactic-foam part includes an elongated member partially embedded in the resin and including a first end and a second end. At least the first end is located relative to the syntactic-foam part such that the first end is exposed to an exterior of the syntactic-foam part at an exterior surface of the syntactic-foam part.

The subject matter of the following paragraph constitutes example 2 of the present disclosure. According to example 2, which encompasses example 1, above, the low-density spheres may be hollow or substantially hollow.

The subject matter of the following paragraph constitutes example 3 of the present disclosure. According to example 3, which encompasses any of examples 1-2, above, the first end may be one of flush with or proud of the exterior surface.

The subject matter of the following paragraph constitutes example 4 of the present disclosure. According to example 4, which encompasses any of examples 1-3, above, the exterior surface may be a first exterior surface. The second end may be located relative to the syntactic-foam part such that the second end is exposed to the exterior of the syntactic-foam part at a second exterior surface of the syntactic-foam part.

The subject matter of the following paragraph constitutes example 5 of the present disclosure. According to example 5, which encompasses any of examples 1-4, above, the first exterior surface and the second exterior surface may be on the same side of the syntactic-foam part.

The subject matter of the following paragraph constitutes example 6 of the present disclosure. According to example 6, which encompasses any of examples 1-4, above, the first exterior surface may be on a side of the syntactic-foam part that is opposite the second exterior surface.

The subject matter of the following paragraph constitutes example 7 of the present disclosure. According to example 7, which encompasses any of the examples 1-6, above, the elongated member may be made of at least one of a metallic material, a ceramic material, or a composite material.

The subject matter of the following paragraph constitutes example 8 of the present disclosure. According to example 8, which encompasses any of examples 1-7, above, the elongated member may be hollow or substantially hollow so that a thermally conductive fluid is flowable through the elongated member between the first end and the second end.

The subject matter of the following paragraph constitutes example 9 of the present disclosure. According to example 9, which encompasses any of examples 1-8, above, the elongated member may be made of an electrically conductive material.

The subject matter of the following paragraph constitutes example 10 of the present disclosure. According to example 10, which encompasses any of examples 1-9, above, the elongated member may be a first elongated member. The apparatus may further include a second elongated member including a first second-member end 105 and a second second-member end 107. The first second-member end 105 may be located relative to the syntactic-foam part 142 such that the first second-member end 105 is exposed to the exterior 110 of the syntactic-foam part 142.

The subject matter of the following paragraph constitutes example 11 of the present disclosure. According to example 11, which encompasses any of examples 1-10, above, the elongated member may extend entirely through the syntactic-foam part.

The subject matter of the following paragraph constitutes example 12 of the present disclosure. According to example 12, a system may include a first syntactic-foam part. The first syntactic-foam part may include a first set of low-density spheres at least partially embedded in a first resin. The system may include a first elongated member partially embedded in the first resin. The first elongated member may include a first first-member end and a second first-member end. At least the first first-member end may be located relative to the first syntactic-foam part such that the first first-member end is exposed to an exterior of the first syntactic-foam part at an exterior surface of the first syntactic-foam part. The system may include a second syntactic-foam part that includes a second set of low-density spheres at least partially embedded in a second resin. The second elongated member may be at least partially embedded in the second resin and includes a first second-member end and a second second-member end. The second elongated member may be coupled to the first elongated member.

The subject matter of the following paragraph constitutes example 13 of the present disclosure. According to example 13, which encompasses example 12, above, the second second-member end may be selectively directly coupled to the first first-member end.

The subject matter of the following paragraph constitutes example 14 of the present disclosure. According to example 14, which encompasses any of examples 12-13, above, the system includes a connector. The second-second member end may be indirectly coupled to the first first-member end via the connector, which is engaged with and extends between the second second-member end and the first first-member end.

The subject matter of the following paragraph constitutes example 15 of the present disclosure. According to example 15, which encompasses any of examples 12-14, above, the connector may be at least partially embedded in the first resin.

The subject matter of the following paragraph constitutes example 16 of the present disclosure. According to example 16, a method of making a syntactic-foam part includes loading low-density spheres into a mold. The method includes introducing an elongated member into the mold so that the elongated member is at least partially embedded within the low-density spheres. The method includes introducing a resin into the mold. The method includes embedding the low-density spheres, and a portion of the elongated member embedded within the low-density spheres, within the resin. The method includes solidifying the resin after embedding the low-density spheres and the portion of the elongated member embedded within the low-density spheres within the resin. The method includes removing the low-density spheres (120) and the elongated member from the mold.

The subject matter of the following paragraph constitutes example 17 of the present disclosure. Example 17, which encompasses example 16, above, the method may include, after solidifying the resin, removing the elongated member from the syntactic-foam part.

The subject matter of the following paragraph constitutes example 18 of the present disclosure. Example 18, which encompasses any of examples 16-17, above, the elongated member may be hollow or substantially hollow and includes a first end and a second end, which are open ends. The method may further include covering at least one of the first end and the second end after solidifying the resin.

The subject matter of the present disclosure constitutes example 19 of the present disclosure. Example 19, which encompasses any of examples 16-18, above, the method may include forming a foam within the elongated member prior to covering the at least one of the first end and the second end.

The subject matter of the following paragraph constitutes example 20 of the present disclosure. Example 20, which encompasses any of examples 16-19, above, the elongated member may be hollow or substantially hollow. The method further includes flowing a thermally conductive fluid through the elongated member while solidifying the resin.

The described features, structures, advantages, and/or characteristics of the subject matter of the present disclosure may be combined in any suitable manner in one or more examples. In the following description, numerous specific details are provided to impart a thorough understanding of examples of the subject matter of the present disclosure. One skilled in the relevant art will recognize that the subject matter of the present disclosure may be practiced without one or more of the specific features, details, components, materials, and/or methods of a particular example. In other instances, additional features and advantages may be recognized in some examples that may not be present in all examples. Further, in some instances, well-known structures, materials, or operations are not shown or described in detail to avoid obscuring features of the subject matter of the present disclosure. The features and advantages of the subject matter of the present disclosure will become more fully apparent from the following description and appended claims, or may be learned by the practice of the subject matter as set forth hereinafter.

### BRIEF DESCRIPTION OF THE DRAWINGS

In order that the advantages of the subject matter may be more readily understood, a more particular description of the subject matter briefly described above will be rendered by reference to specific examples that are illustrated in the appended drawings. Understanding that these drawings, which are not necessarily drawn to scale, depict only some examples of the subject matter and are not therefore to be considered to be limiting of its scope, the subject matter will be described and explained with additional specificity and detail through the use of the drawings, in which:
Figure 1A is a top perspective view of an apparatus having a syntactic-foam part and an elongated member;
Figure 1B is a transparent top perspective view of an apparatus having a syntactic foam part and an elongated member;
Figure 2 is top perspective view of an apparatus having a syntactic-foam part and an elongated member extending only partially through the syntactic-foam part;
Figure 3 is a front elevation view of a system;
Figure 4A is a front elevation view of a system having a connector;
Figure 4B is a close-up view of a system having a connector;
Figure 5A is a top elevation view of low-density spheres in a mold;
Figure 5B is a top elevation view of an elongated member extending through low-density spheres;
Figure 5C is a top elevation view of low-density spheres in a mold and coated with resin;
Figure 5D is a top elevation view of a material being flowed through an elongated member;
Figure 5E is a top elevation view of low-density spheres in a mold and coated with resin, with an elongated member removed from the mold;
Figure 6 is a front elevation view of an apparatus having a syntactic-foam part and a capped elongated member;
Figure 7 is a front elevation view of an apparatus having a syntactic-foam part and a capped elongated member filled with a foam material;
Figure 8 is a top perspective view of an apparatus having a syntactic-foam part and a number of elongated members;
Figure 9 is a side elevation view of an apparatus having a syntactic-foam part and a number of elongated members extending through the syntactic-foam part;
Figure 10 is a side elevation view of an apparatus having a syntactic-foam part and an elongated member with a plurality of parts;
Figure 11 is a side elevation view of an apparatus having a syntactic-foam part and a plurality of elongated members extending from a first surface to a second surface;
Figure 12 is a side elevation view of an apparatus having a plurality of elongated members extending from a first side of a syntactic-foam part to a second side of a syntactic-foam part adjacent to the first side; and
Figure 13 is a schematic flow diagram of a method of making a syntactic-foam part.

### DETAILED DESCRIPTION

Reference throughout this specification to "one example," "an example," or similar language means that a particular feature, structure, or characteristic described in connection with the example is included in at least one example of the present disclosure. Appearances of the phrases "in one example," "in an example," and similar language throughout this specification may, but do not necessarily, all refer to the same example. Similarly, the use of the term "implementation" means an implementation having a particular feature, structure, or characteristic described in connection with one or more examples of the present disclosure, however, absent an express correlation to indicate otherwise, an implementation may be associated with one or more examples.

Some conventional methods for making syntactic foams include stacking low-density spheres into a mold in contact with each other. The mold is then infused with a resin, which embeds the spheres. As the resin cures, it releases heat, which raises the temperature within the mold. Such high temperatures can be dangerous and can degrade the quality of the foam by introducing residual stresses or degrading the resin or spheres.

Described herein are examples of a method of making syntactic-foam parts made of low-density spheres embedded in a resin that provides the ability to more precisely control temperature throughout the syntactic-foam part. Examples of the present disclose can also help to expedite the curing process for the syntactic-foam parts without sacrificing quality. Examples of the present disclose can help to reduce costs and facilitate making larger syntactic-foam parts. Some examples of the method include introducing an elongated member into the mold before infusing the mold and embedding the spheres within resin. The elongated member can help to conduct heat throughout the mold, which helps to reduce overheating and the overall occurrence of residual stress.

In some examples, the method results in apparatuses and/or systems, including foam parts with elongated members suitable for connection to components of other foam parts. Connecting separate foam parts can help to facilitate connection of electrical components housed within those foam parts, allow multiple foam parts to move as a unit, and/or allow electricity and/or heat to be conducted through multiple separate foam parts.

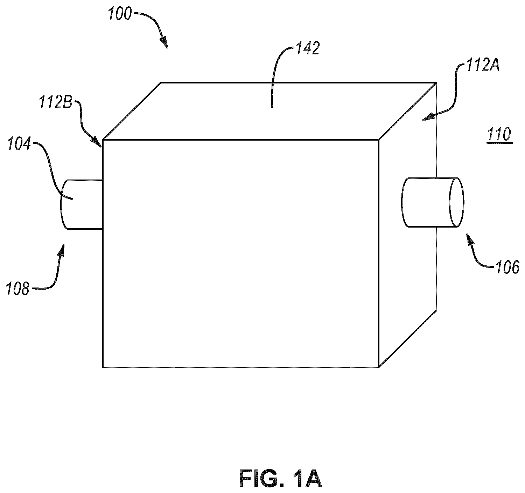

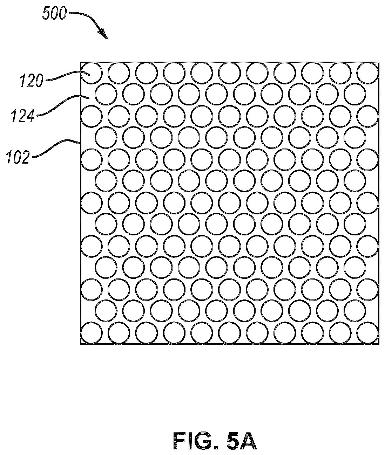

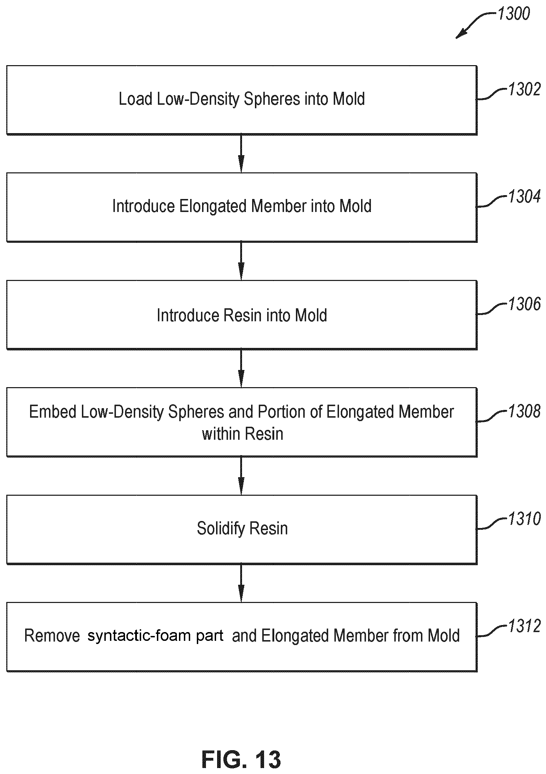

According to some examples, a method 1300 of making an apparatus, such as apparatus 100 of Figures 1A-B, is shown in Figure 13. Referring generally to Figure 13 and specifically to Figure 5A, the method 1300 includes (block 1302) loading low-density spheres 120 into a mold 102. In some examples, the mold 102 includes a selectively openable lid that selectively covers an opening in the mold 102 through which the low-density spheres 120 can be loaded into the mold 102. In some examples, the low-density spheres 120 are loaded so that the low-density spheres 120 form a lattice arrangement within the mold 102. In some examples, in the lattice arrangement, each one of the low-density spheres 120 contacts each one of at least two other ones of the low-density spheres 120 at a single contact point to form either a bi-modal or tri-modal distribution of spheres. In some examples, the low-density spheres 120 include low-density spheres of several different sizes, such as spheres of five different sizes.

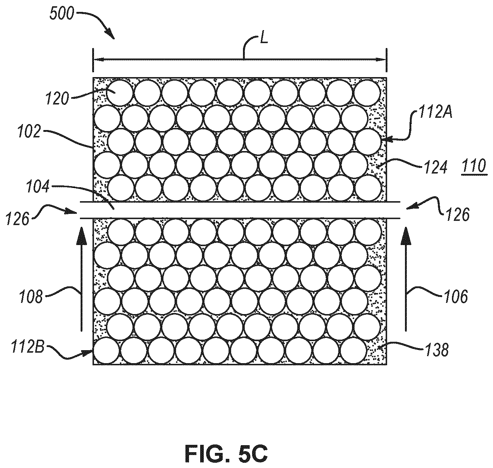

Referring to Figures 5C-E, 6, and 7, in some examples, the mold 102 forms part of a molding tool, which further includes a resin introduction system. The resin introduction system is operable to introduce a resin 138 into an interior cavity 124 of the mold 102. In some examples, the resin introduction system includes inlets and/or outlets, such as an inlet operable to introduce the resin 138, from a source, into the interior cavity 124. In some examples, an outlet is operable to drain excess resin 138 from the interior cavity 124.

The size and shape of the interior cavity 124 of the mold 102 defines the size and shape of the syntactic-foam part 142. Additionally, in some examples, the size and shape of the interior cavity 124 is configured to ensure the low-density spheres 120, when loaded into the mold 102, form a particular arrangement. Therefore, the size and shape of the interior cavity 124 can be dependent on the size of the low-density spheres 120, or vice versa. It is noted that the low-density spheres 120 and the mold 102 are not necessarily to scale. For example, in the illustrated renderings, the size of the low-density spheres 120 is abnormally large relative to the size of the mold 102 for better clarity in showing and describing the examples. In practice, the size of the low-density spheres 120 will be much smaller relative to the size of the mold 102 than as depicted. In some examples, the maximum diameter D of the low-density spheres 120 is between, and inclusive of, 5 microns and 153 millimeters (mm), such as between, and inclusive of, 20 microns and 10,000 microns in some examples, such as between, and inclusive of, 25 microns and 5,000 microns in some examples, such as between, and inclusive of, 250 microns and 35,000 in some other examples, and between, and inclusive of, 500 microns and 1,000 microns in yet some other examples.

According to some examples, as shown in Figure 5C, each one or at least one of the low-density spheres 120 is a hollow sphere. A hollow sphere has a hollow interior space defined by an interior surface of a sidewall that also defines an exterior surface of the low-density sphere 120. A hollow sphere has a thin-walled construction. In other words, a thickness of the sidewall of a hollow sphere is smaller than the diameter of the hollow sphere. In some examples, a ratio of the thickness to the diameter is between, and inclusive of, .001 and 0.1, such as between, and inclusive of, 0.01 and 0.1 in some examples, and between, and inclusive of, 0.02 and 0.08 in some other examples. The hollow sphere can be made of any of various materials, such as, but not limited to, glass, ceramic, polymer, metal, and/or the like.

In some alternative examples, each one or at least one of the low-density spheres 120 is a non-hollow foam sphere. The foam sphere does not have a single hollow space, such as with the hollow sphere. Rather, the foam sphere is made of a solid piece of foam, which has multiple hollow spaces in the form of multiple open or closed cells. In some examples, the foam of the foam sphere is one or more of polystyrene foam, expanded polystyrene (EPS) foam, expanded polyethylene (EPP) foam, polyethylene foam, polyurethane foam, and/or any of various other types of foam.

As used herein, in some examples, a low-density sphere 120 is a hollow or non-hollow sphere having a density of between, and inclusive of, 0.005 g/cm³ and 0.6 g/cm³, such as between, and inclusive of, 0.05 g/cm³ and 0.4 g/cm³ in some example, between, and inclusive of, 0.1 g/cm³ and 0.3 g/cm³ in some other examples, between, and inclusive of, 0.02 g/cm³ and 0.15 g/cm³ in yet some other example, and between, and inclusive of, 0.015 g/cm³ and 0.03 g/cm³ in some further examples. Although not shown, in some examples, the low-density spheres 120 can be pre-coated with a uniform coating before being loaded into the mold 102 at block 1302. The uniform coating can be made of any of various materials, such as, but not limited to, a pre-ceramic material, polymer, ceramic, a foam material (e.g., a resin loaded with a portion of the low-density spheres 120), a reinforced resin (e.g., a resin loaded with a milled fiber and/or a particle reinforcement), and/or the like. In some cases, such as when the low-density sphere 120 is a non-hollow foam sphere, the uniform coating can provide strength and/or a thermal barrier to the underlying sphere. In some examples, the uniform coating is a resin 138.

In some examples, such as shown in Figure 5A, all the low-density spheres 120 loaded into the mold 102 at block 1302 have the same size. However, in some other examples, the low-density spheres loaded into the mold 102 at block 1302 can have different sizes and can be loaded into the mold 102 at separate times corresponding to their sizes.

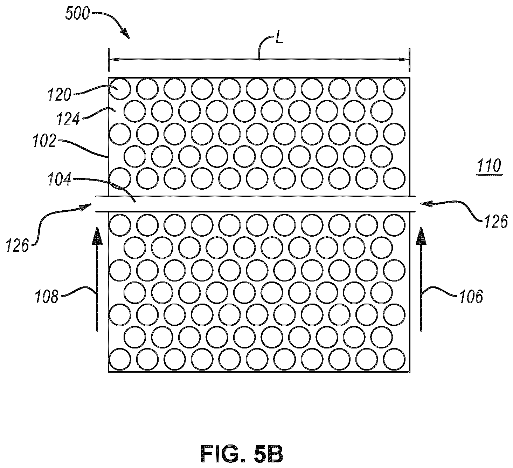

As shown generally in Figure 13 and specifically in Figure 5B, after the low-density spheres 120 are loaded into the mold 102 at block 1302, the method 1300 additionally includes (block 1304) introducing an elongated member 104 into the mold. In some examples, the method 1300 includes introducing an elongated member 104 into the mold before introducing the low-density spheres 120. In some examples, the method 1300 includes introducing at least a portion of the low-density spheres 120 to the mold 102 after introducing the elongated member 104. In some examples, introducing the elongated member 104 includes introducing the elongated member 104 such that the elongated member 104 is at least partially embedded within the low-density spheres 120.

Referring to Figure 5B, in some examples, the elongated member 104 is introduced into the mold 102 through one or more paths 126 formed through the mold 102. In some examples, the elongated member 104 has dimensions allowing it to be introduced into the mold 102 without forming paths 126 in the mold 102. For example, the elongated member 104 is introduced via an open top of the mold 102 and/or another open side of the mold 102. In some examples, the elongated member 104 is introduced to the mold 102 after the low-density spheres 120 are introduced. In some other examples, the elongated member 104 is introduced into the mold 102 first, and the low-density spheres 120 are subsequently introduced to at least partially embed the elongated member 104.

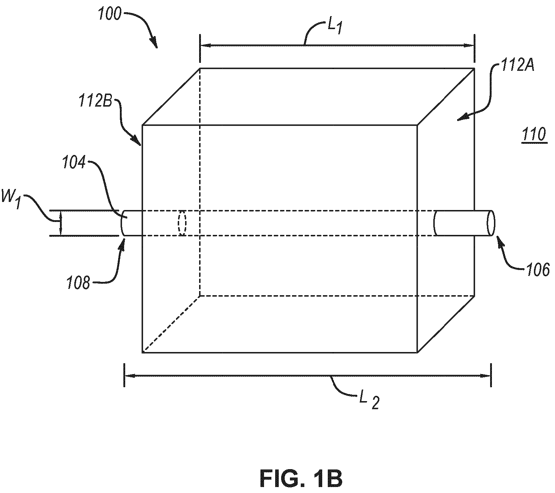

In some examples, the elongated member 104 has a first end 106 and a second end 108 opposite to the first end 106. Referring to Figure 1B, in some examples, the elongated member 104 has a length L2, from the first end 106 to the second end 108, that is greater than a width *w1* of the elongated member 104. In some examples, the elongated member 104 has a length L2, from the first end 106 to the second end 108, that extends entirely through the syntactic-foam part 142. In some examples, the length *L2* of the elongated member 104 is greater than or equal to the length *L1* of the syntactic-foam part 142.

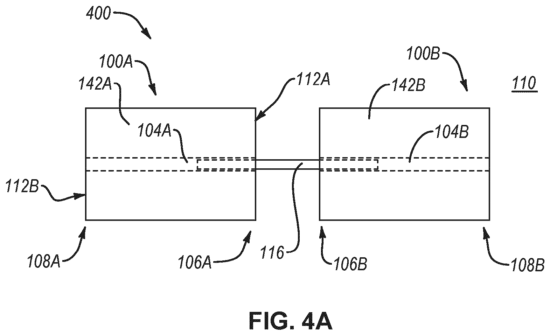

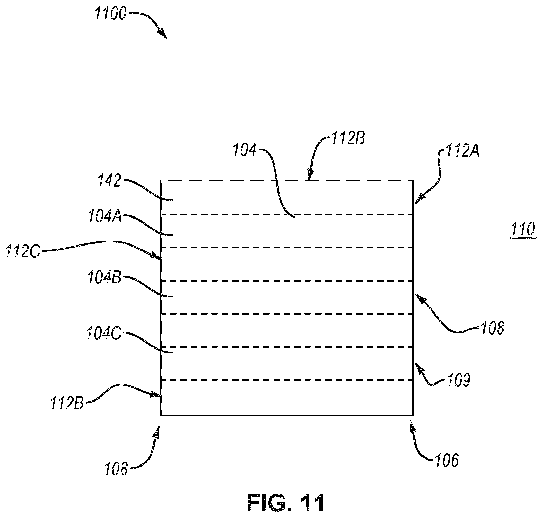

In some examples, introducing 1304 the elongated member 104 into the mold includes introducing the elongated member 104 into the mold 102 such that at least one of the first end 106 and the second end 108 is exposed to an exterior 110 of the mold 102. Referring to Figures 5B-D, in some examples, a first end 106 of the elongated member 104 is proud of the mold 102. As such, referring to Figures 1A-3, 6-10, and 12, in some examples, the elongated member 104 is proud of an exterior surface 112A of a resulting syntactic-foam part 142. In some examples, the first end 106 is flush with the mold 102. As such, referring to Figures 4A-B and 11, in some examples, the first end 106 of the elongated member 104 flush with the exterior surface 112A of the resulting syntactic-foam part 142.

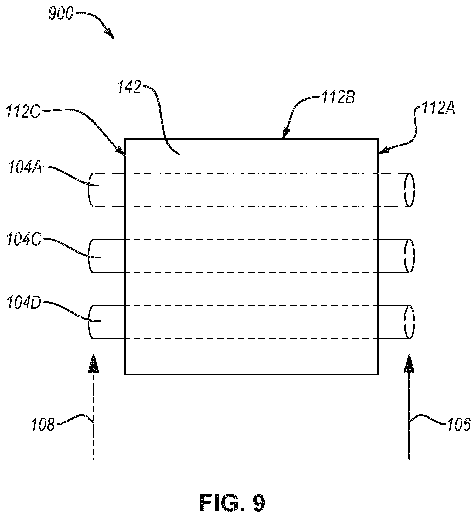

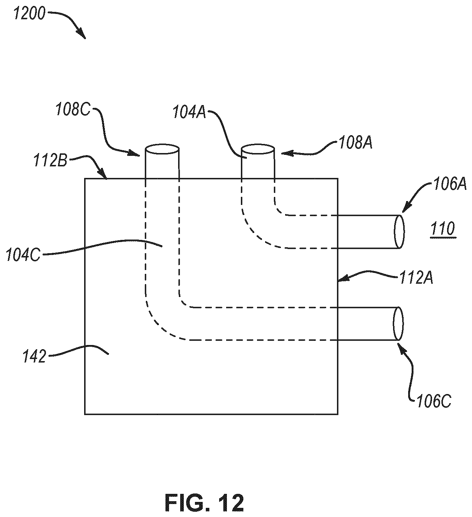

In some examples, the second end 108 is also exposed to the exterior 110 of the mold 102. Referring to Figures 5B-D, in some examples, the second end 108 is proud of the mold 102. In other examples, referring to system 1100 in Figure 11, the second end 108 is flush with the mold 102 and, thus, flush with an exterior surface 112C of a resulting syntactic-foam part 142. In some examples, the exterior surface 112C is opposite to the exterior surface 112A which the first end 106 is flush with. Referring to Figure 12, in some other examples, the second end 108 is flush with and/or proud of and adjacent surface 112B of the resulting syntactic-foam part 142. Referring to Figure 9, in some examples, the second end 108 is proud of an exterior surface 112C of the syntactic-foam part 142 that is opposite to an exterior surface 112A of which the first end 106 is proud.

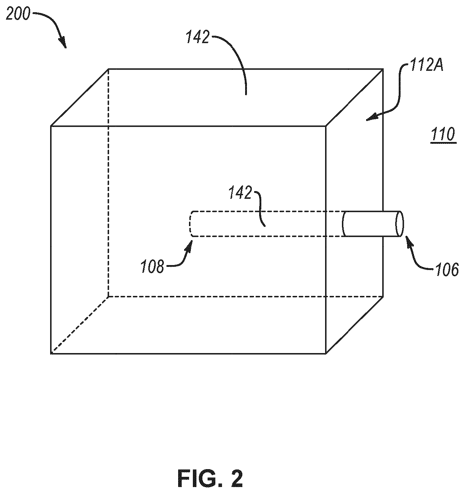

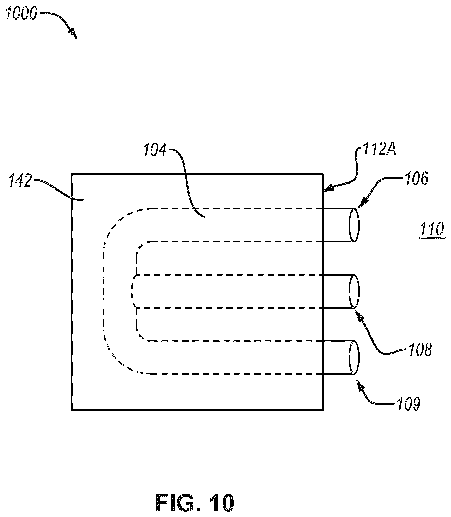

In some examples, the second end 108 is proud of the mold 102 at the same side as the first end 106, and, referring to Figure 10, the second end 108 is proud of the same surface 112A of the syntactic-foam part 142 which the first end 106 is proud of. In some other examples, the second end 108 is within the mold 102. Referring to Figure 2, in system 200, the second end 108 is completely within the resulting syntactic-foam part 142.

In some examples, the elongated member 104 is made of a thermally conductive material, helping to encourage heat to flow through the mold 102 as the syntactic-foam part 142 is being formed. The thermally conductive material includes, for example, a metallic material. In some examples, the elongated member 104 is a rod of metallic material. In some examples, the elongated member 104 is made of an electrically conductive material in addition or alternative to a thermally conductive material. The elongated member 104 is, in some examples, made from a material that is both thermally and electrically conductive. Possible materials include, for example, titanium, semiconductors, carbon, carbon nanotube composites, carbon fiber composites, ceramic, silicon carbide, aluminum, copper, silver, gold, graphite, doped silicon, and/or any combination thereof. In some examples, a material which the elongated member 104 is made of is selected based at least in part on compatibility with the resin 138.

In some examples, the elongated member 104 resembles at least one of the following shapes: a strip, a rod, a rectangular prism, a tube, a cylinder, an elliptical tube, and/or any combination thereof. In some examples, the elongated member 104 extends in a manner that creates at least one of the following shapes: a half circle shape, a U-shape, a triangle, a half-rectangle, a half-square, a line, an L-shape, an extruded shape, a bent shape, an E-shape, and/or a combination thereof.

As shown generally in Figure 13 and specifically in Figure 5C, in some examples the method 1300 additionally includes (at block 1306) introducing a resin 138 into the mold. In some examples, the resin 138 is introduced into the mold 102 through an inlet of the mold 102. In yet some examples, the resin 138 is introduced through an inlet at the bottom of the mold 102 and allowed to flow in a bottom-to-top or generally bottom-to-top direction from the bottom of the mold 102 to the top of the mold 102. In some examples, the resin 138 is actively pushed and/or actively pulled (e.g., via a vacuum) to urge the resin 138 to flow through the mold 102 in the bottom-to-top or generally bottom-to-top direction. In some other examples, the resin 138 is passively gravity-fed in a top-to-bottom direction through the mold 102.

According to some examples, the resin 138 can be actively pushed via positive pressure introduced at the bottom of the mold 102, such as via a positive pressure device (e.g., blower, compressor, etc.). In yet some examples, the resin 138 can be actively pulled via a negative pressure introduced at the top of the mold 102, such as via a negative pressure device (e.g., a vacuum device).

Referring generally to Figure 13 and specifically to Figure 5C, the method 1300 additionally includes (block 1308) embedding the low-density spheres 120 and a portion of the elongated member 104 within the resin 138 introduced into the mold 102 at block 1306. In some examples, embedding the low-density spheres 120 within the resin 138 includes coating the low-density spheres 120 with the resin 138. Coating the low-density spheres 120 at block 230 forms a coating, made of the resin 138, around an entirety of each one of the low-density spheres 120. The low-density spheres 120 are coated as the resin 138 flows through the mold 102 and the resin 138 contacts and adheres to exterior surfaces of the low-density spheres 120. The method of introducing the resin 138 can promote the adhesion of the resin 138 to and the coating of the resin 138 onto the low-density spheres 120. According to some examples, to promote adhesion of the resin 138 to the low-density spheres 120 (particularly when the low-density spheres 120 are made of a material having relatively low adhesion properties, such as polystyrene), the method 1300 can also include applying an adhesion-promoting agent onto the exterior surfaces of the low-density spheres 120 before the resin 138 is introduced into the mold 102. The adhesion-promoting agent or wetting agent can be any of various agents configured to promote adhesion, such as, but not limited to silane. In some examples, the adhesion-promoting agent is aspirated or vaporized and sprayed into the mold 102.

As the resin 138 flows through the mold 102 and coats the entirety of low-density spheres 120, the narrow spaces between adjacent ones of the low-density spheres 120 (i.e., in close proximity to or around points of adjacent ones of the low-density spheres 120 nearest each other, or nearest points) induces wicking or capillary action of the resin 138 into the narrow spaces.

As defined herein, an entirety of a low-density sphere 120 is coated with the resin 138 when all or substantially all of the low-density sphere 120 is coated with the resin 138, or, when a single contact point between adjacent ones of the low-density spheres 120 is maintained, all or substantially all of the low-density sphere 120, except for the single contact point, is coated with the resin 138.

The first resin 138 can be any of various types of resin conducive to coating low-density spheres. According to some examples, the first resin 138 is one or more of a pre-ceramic resin (e.g., silane pre-ceramic resin), a resin matrix composite material (i.e., reinforcement materials embedded in a matrix material), nano-scale materials introduced via a slip cast process, glass, water glass (e.g., sodium silicate), a high-modulus polymer (e.g., highly cross-linked stiff-chain polymer, nano-particle loaded polymer, colloidal silica nanoparticle loaded polymer, and/or crystalline polymers), a vinylester resin, a polyester resin, and/or the like. The reinforcement materials of the resin matrix composite material can be any of various materials, such as fumed silica, nanoparticles, milled carbon fibers, and/or the like. In some examples, the first resin 138 includes a solvent that helps thin the first resin 138 and promote a thin coating of the low-density spheres.

Although the resin 138 is shown as coating individual low-density spheres 120 in Figure 5C, examples of the present disclosure are not so limited. In some examples, the resin 138 fills or substantially fills interstitial spaces between the low-density spheres 120 within the interior cavity 124. In some examples, the method 1300 includes coating the low-density spheres 120 with the first resin and introducing a second resin into the interior cavity 124, where the first resin coats the individual low-density spheres 120 and the second resin fills interstitial space between the coated low-density spheres 120. The second resin can be introduced into and/or drained from the interior cavity 124 of the mold 102 via any of the methods described above in connection with the resin 138.

The second resin can be any of various types of resin conducive to embedding and immobilizing the low-density spheres 120. According to some examples, the second resin is one or more of a thermoset resin (e.g. an epoxy resin), a resin matrix composite material (i.e., reinforcement materials embedded in a matrix material), a high-modulus polymer (e.g., nanoparticle loaded polymer), and the like. The reinforcement materials of the resin matrix composite material can be any of various materials, such as fumed silica, nanoparticles, milled carbon fibers, and/or the like. According to some examples, the second resin includes density-reducing components, such as smaller low-density spheres (e.g., hollow polymer or glass spheres), which helps to reduce the density of the second resin without compromising the strength of the second resin.

In some examples, the elongated member 104 is in thermal contact with a thermally-conductive media, such as a thermally-conductive media layer. In some examples, the thermally-conductive media layer is porous and has a porosity high enough to allow the low-density spheres 120 to pass through as the spheres 120 are loaded into the mold 102. In other words, the thermally-conductive media layers have at least some voids larger than each one of the low-density spheres 120. Because the low-density spheres 120 can pass through the thermally-conductive media layers in this example, the thermally-conductive media layers can be angled (e.g., perpendicular) to a loading direction of the low-density spheres 120. In some examples, including the illustrated example, loading of the low-density spheres 120 is aided by gravity such that the loading direction of the low-density spheres 120 is a vertical direction or substantially vertical direction or top-to-bottom direction.

In some other examples, the thermally-conductive media layers of the mold 102B of the tool do not have a porosity high enough to enable the low-density spheres 120 to pass through. Instead, the thermally-conductive media layers can act as barriers that prevent passage of the low-density spheres 120. Because the thermally-conductive media layers are non-porous to the low-density spheres 120, the thermally-conductive media layers can be parallel or substantially parallel to each other and parallel to the loading direction of the low-density spheres 120 such that the low-density spheres 120 are stacked vertically between adjacent ones of the thermally-conductive media layers. Embedding the portion of the elongated member 104 within the resin 138 includes embedding the portion of the elongated member 104 within low-density spheres 120 coated with the resin 138. Although Figures 5B-D show an elongated member 104 visible from a top elevation view for simplicity, in some examples, the elongated member 104 is surrounded by low-density spheres 120 and/or resin 138 on all sides radially.

Referring generally to Figure 13, after embedding the low-density spheres 120 and the portion of the elongated member 104 within the low-density spheres 120 within the resin 138 at block 1308, the method 1300 also includes (block 1310) solidifying the resin 138. Solidifying the resin 138 includes changing the state of the resin 138 from one state to a harder state (e.g., from a flowable or semi-flowable state to a non-flowable state), such as changing the resin 138 from a fluid to a solid. According to some examples, solidifying the resin 138 includes partially or fully curing or drying the resin 138. Fully curing the resin 138 can include raising the temperature of the resin 138 to a first cure temperature of the resin 138. To promote complete filling of the resin 138, the interior cavity 124 of the mold 102 can be pressurized. In some alternative examples, the resin 138 is partially or fully cured via alternative methods, such as radiation processing (e.g., ultraviolet radiation processing, electron beam processing, x-ray processing, etc.) of the resin 138. The curing of the resin 138 can be irreversible (e.g., the resin 138 can be a thermoset material) or reversible (e.g., the resin 138 can be a thermoplastic material). When the resin 138 is a pre-ceramic resin, solidifying the resin 138 at block 1310 can include converting a pre-ceramic resin into a ceramic. According to some examples, the resin 138, and thus a coating formed by the resin 138, can be an electrically and/or thermally conductive resin so that electrical and/or thermal connectivity can be established from coating to coating through the part 142 if desired.

In some examples, the method 1300 includes introducing a first and second resin into the mold. In such examples, the method 1300 includes, after the second resin is introduced into and fills the mold 102, solidifying the second resin. According to some examples, solidifying the second resin includes solidifying the second resin in accordance with any of the methods described above with respect to the first resin 138.

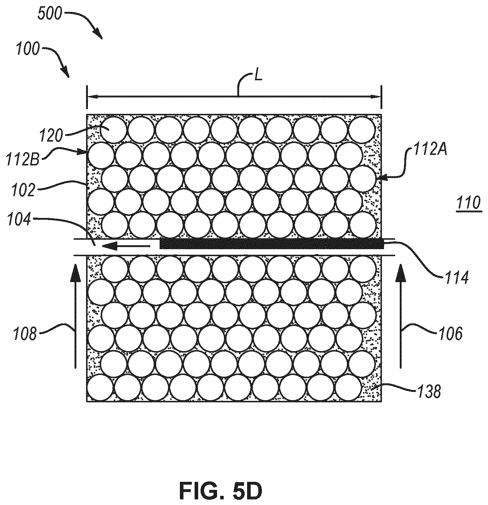

Referring to Figure 5D, in some examples, the method 1300 includes flowing a fluid 114 through the elongated member 104 while introducing and/or solidifying the resin 138. In such examples, the elongated member 104 is hollow or substantially hollow. The first end 106 and second end 108 of the elongated member 104 are open ends and/or comprise inlets and/or outlets such that the fluid 114 can be introduced into the elongated member 104 at a first end 106 and through the length *L2* of the elongated member 104. In some examples, the fluid 114 can flow out of the elongated member 104 via the second end 108. The fluid 114 can also flow through the elongated member 104 in an opposite direction, or from the second end 108 to the first end 106.

In some examples, the fluid 114 is a substance that is selected to control and/or alter a temperature within the mold 102. The fluid 114 includes, for example, a thermally conductive substance. In some examples, the fluid 114 includes a cooling substance, such as water, air, ethylene glycol, propylene glycol, a dielectric, and/or any combination thereof. In some examples, when the fluid 114 is introduced into the elongated member 104, the fluid 114 has a temperature of not less than 15^{°} C and not greater than 230^{°} C, such as not less than 15^{°} C and not greater than 180^{°} C. In some examples, the fluid 114 includes a thermally conductive substance and can help to dissipate heat throughout the mold 102 as it flows through the elongated member 104. In some examples, the temperature of the fluid 114 can be varied during the cure of the resin 138 to provide a particular time and temperature cycle.

In some examples, rather than flowing fluid 114 through the elongated member 104, the method 1300 includes placing a thermally conductive solid within the elongated member 104 during processing of the syntactic-foam part 142. In some examples, the thermally conductive solid includes sand, a cooling device, a frozen substance, and or a rod of thermally conductive material, such as aluminum. The method 1300 includes, in some examples, removing the thermally conductive solid and/or the fluid 114 from the elongated member 104 after solidifying 1310 the resin 138.

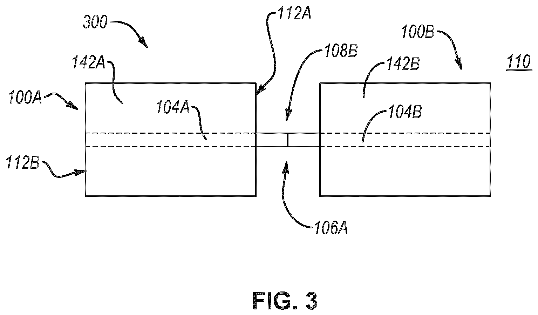

In some examples, the elongated member 104 is hollow or substantially hollow and serves as a conduit for electrical connections, wires, hoses, and/or any combination thereof. Referring to Figures 3-4B, in some examples, wires can be routed from a first syntactic-foam part 142A and through a second syntactic-foam part 142B via hollow elongated members 104A and 104B.

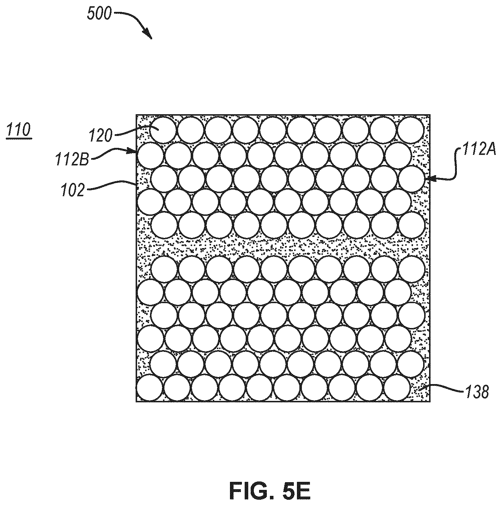

According to some examples, after the resin 138 is solidified at block 1310, the low-density spheres 120 and the resin 138 form a syntactic-foam part 142, and the syntactic-foam part 142 and the elongated member 104 form an apparatus 100. As shown in Figure 13, the method 1300 can further include removing the syntactic-foam part 142 from the mold 102 (block 1312). In some examples, as shown in Figure 5E, the method 1300 also includes removing (block 1312) the elongated member 104 from the mold 102. In some examples, the method 1300 includes removing the elongated member 104 from the mold 102 before removing the syntactic-foam part 142. In some examples, the method 1300 includes filling any space within the syntactic-foam part 142 that was previously occupied by the elongated member 104 with another material, such as a foam. In some other examples, the method 1300 includes removing 1312 the elongated member 104 and the syntactic-foam part 142 from the mold 102 together, resulting in an apparatus 100 including a syntactic-foam part 142 and an elongated member 104 partially embedded therein, as shown in Figures 1A-4B and 6-12. In some examples, any resin 138 coating the interior surfaces of the mold 102 may be removed along with the syntactic-foam part 142, which can then be removed from the part or form a portion of the part.

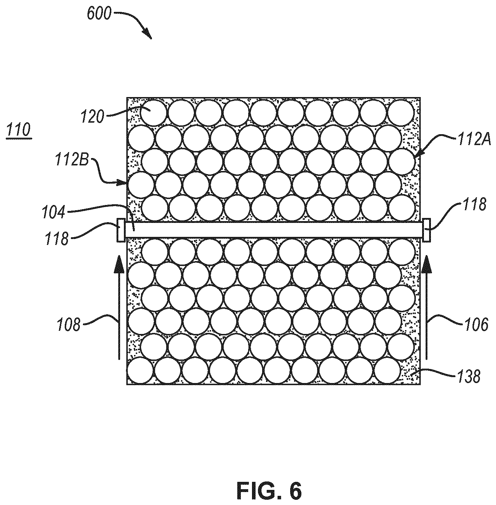

Referring back to Figure 6, in some examples, an apparatus 600 includes an elongated member 104 at least partially embedded within the low-density spheres 120. In some examples, the apparatus 600 includes one or more caps 118 configured to cover and/or seal the first end 106 and the second end 108 of the elongated member 104. In some examples, the caps 118 are not removable from the elongated member 104. For example, the caps 118 are welded onto the elongated member 104. In some other examples, the caps 118 are removable from the elongated member 104. The caps 118 and/or ends 106 and 108 include portions configured to mate with each other, such as threaded portions. The elongated member 104 is hollow or substantially hollow, and the ends 106 and 108 are open ends. As such, the caps 118 help to seal the ends 106 and 108 from the exterior 110 and/or prevent the fluid 114 from flowing out of the elongated member 104. In some examples, the method 1300 includes covering the first end 106 and the second end 108 with the caps 118 after solidifying the resin 138.

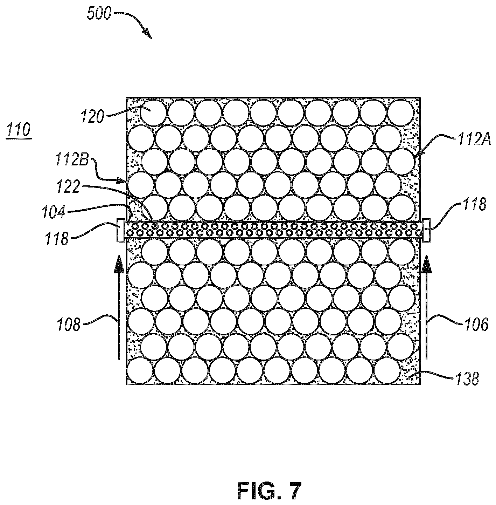

Referring to Figure 7, in some examples, an apparatus 700 includes an elongated member 104 at least partially embedded within the low-density spheres 120. In some examples, the elongated member 104 is hollow or substantially hollow, and the method 1300 includes forming a foam within the elongated member 104 by introducing additional low-density spheres 120 and/or a resin into the elongated member 104. In some examples, the method 1300 also includes covering the first end 106 and/or the second end 108 with the caps 118 after forming the foam.

Referring to Figures 3-4B, examples of the present disclosure include systems 300 and 400 with multiple apparatuses 100A, 100B having syntactic foam parts 142A, 142B connected via elongated members 104A, 104B.

Referring to Figure 3, a system 300 includes a first apparatus 100A and a second apparatus 100B. The first apparatus 100A includes a first syntactic-foam part 142A and first elongated member 104A. The second apparatus 100B includes a second syntactic-foam part 142B and a second elongated member 104B. Each of the first elongated member 104A and second elongated member 104B are at least partially embedded in their respective syntactic foam parts 142A and 142B. The second elongated member 104B is coupled to the first elongated member 104A.

In some examples, the method 1300 includes locating the first elongated member 104A within the mold 102 during formation of the apparatus 100A and locating the second elongated member 104B within the mold 102 or an additional mold during formation of the apparatus 100B. This is done so that the first elongated member 104A is aligned or substantially aligned with the second elongated member 104B when the first syntactic-foam part 142A is aligned or substantially aligned with the second syntactic-foam part 142B.

In one or more examples, a first first-member end 106A is coupled to a second second-member end 108B in an exterior 110 of the first syntactic-foam part 142A and second syntactic-foam part 142B. The first elongated member 104A and second elongated member 104B are directly coupled to each other. In some examples, the first elongated member 104A and second elongated member 104B include portions configured to mate with each other at their ends 106A and 108B, such as threaded portions.

In some examples, the first elongated member 104A also extends at least partially into the second syntactic-foam part 142B and is coupled to the second elongated member 104B within the second syntactic-foam part 142B.

Referring to Figure 4A, in system 400, the first elongated member 104A is not directly coupled to the second elongated member 104B but instead is indirectly coupled to the second elongated member 104B via a connector 116. The connector 116 is engaged with and extends between the second second-member end 108B and the first first-member end 106A, indirectly coupling the second second-member end 108B and the first first-member end 106A. In some examples, the connector 116 is received by both the first elongated member 104A and the second elongated member 104B. Where the first syntactic foam part 142A and the second syntactic foam part 142B do not contact each other, the connector 116 is exposed to an exterior 110 of the first syntactic-foam part 142A and the second syntactic-foam part 142B.

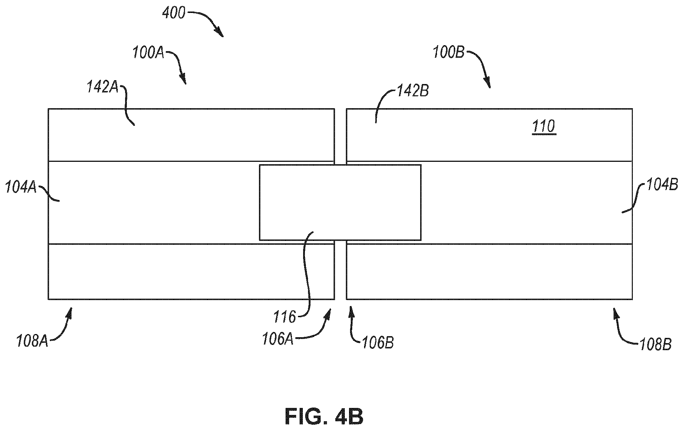

The connector 116 includes portions configured to mate with the first elongated member 104A and the second elongated member 104B. The mating portions include, for example, threaded portions. In some examples, the connector 116 has a tube shape. The connector 116, in some examples, has a diameter that is smaller than the diameter of the first elongated member 104A and the second elongated member 104B such that the connector 116 can fit within the first elongated member 104A and the second elongated member 104B. Referring to Figure 4B, the connector 116, in some examples, is at least partially embedded in the first-part resin 138A and at least partially embedded in the second-part resin 138B. In one or more examples, the connector 116 is hollow or substantially hollow such that fluid, wires, and/or hoses can be routed from the first elongated member 104A, through the connector 116, and into the second elongated member 104B.

In some examples, the connector 116 is removably coupled to the first elongated member 104A and the second elongated member 104B. In some other examples, the connector 116 is fixed to the first elongated member 104A and second elongated member 104B. The connector is fixed to the first elongated member 104A and the second elongated member 104B via, for example, adhesive, welding, soldering, brazing, crimping, and/or any combination thereof.

In some examples, the connector 116 is made of and/or contains foam. In some other examples, the connector 116 is made of the same material as the first elongated material 104A and/or the second elongated material 104B.

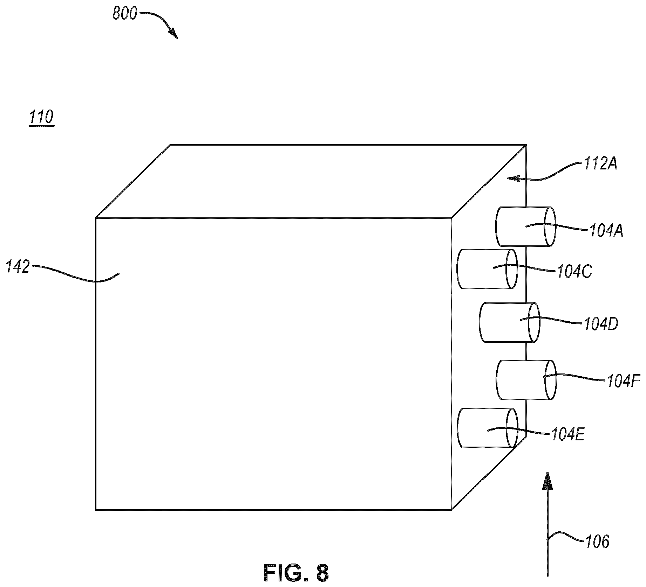

Referring to Figure 8, in some examples, an apparatus 800 includes a syntactic foam part 142 and a plurality of elongated members 104A, 104C, 104D, 104E and 104F. In some examples, the first ends 106 of the elongated member 104A, 104C, 104D, 104E and 104F are exposed to an exterior 110 of the syntactic foam part 142. The elongated members 104A, 104C, 104D, 104E and 104F are each proud of the exterior surface 112A of the syntactic foam part. Referring to Figure 10, in system 1000, each of the elongated members 104A, 104C, 104D, 104E and 104F are connected to each other within the syntactic foam part 142 to form a single elongated member 104. In such examples, the elongated member 104 includes not only a first end 106 and a second end 108 but also, potentially, a third end 109. Each of the first end 106, second end 108, and third end 109 are flush with and/or proud of the same exterior surface 112A, in some examples. In some other examples, the first end 106 and second end 108 are flush with and/or proud of the same exterior surface 112A, while the third end 109 is embedded within the syntactic-foam part and/or flush with or proud of a different exterior surface.

Referring to Figure 8, in some examples, the exposed ends 106 include inlets and/or outlets for introducing a material into the syntactic foam part 142 via the elongated members 104A, 104C, 104D, 104E, and 104F. The quantity of elongated members 104A, 104C, 104D, 104E and 104F is proportional to the volume of the syntactic foam part 142. For higher-volume syntactic foam parts 142, a higher quantity of elongated members 104A, 104C, 104D, 104E and 104F can help to dissipate heat and control the temperature within the part 142.

Referring to Figure 9, in some examples, an apparatus 900 includes a syntactic-foam part 142 with a plurality of elongated members 104A, 104C, 104D at least partially embedded therein. In some examples, the plurality of elongated members 104A, 104C, 104D each extend, from a first end 106 to a second end 108, in a direction that is parallel or substantially parallel to each other. As used herein, "substantially parallel" includes directions within 5-degrees^{°}of each other.

Referring to Figure 12, in some examples, an apparatus 1200 includes a syntactic foam part 142, a first elongated member 104A, and a second elongated member 104C. Each of the first elongated member 104A and the second elongated member 104C are at least partially embedded in the syntactic-foam part 142. In some examples, a first-member first end 106A and a second-member first end 106C are proud of the same first exterior surface 112A, and the first-member second end 108A and the second-member second end 108C are proud of a second surface 112B adjacent to the first surface 112A. In some examples, the first elongated member 104A and/or the second elongated member 104C each include components extending perpendicular or substantially perpendicular to each other within the syntactic foam part 142. In some examples, the syntactic foam part 142 is a first foam part of a plurality of foam parts and is located at a corner of an arrangement of foam parts.

In the above description, certain terms may be used such as "up," "down," "upper," "lower," "horizontal," "vertical," "left," "right," "over," "under" and the like. These terms are used, where applicable, to provide some clarity of description when dealing with relative relationships. But, these terms are not intended to imply absolute relationships, positions, and/or orientations. For example, with respect to an object, an "upper" surface can become a "lower" surface simply by turning the object over. Nevertheless, it is still the same object. Further, the terms "including," "comprising," "having," and variations thereof mean "including but not limited to" unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise. Further, the term "plurality" can be defined as "at least two." Moreover, unless otherwise noted, as defined herein a plurality of particular features does not necessarily mean every particular feature of an entire set or class of the particular features.

The term "about" or "substantially" in some examples, is defined to mean within +/-5% of a given value, however in additional examples any disclosure of "about" may be further narrowed and claimed to mean within +/- 4% of a given value, within +/- 3% of a given value, within +/- 2% of a given value, within +/- 1% of a given value, or the exact given value. Further, when at least two values of a variable are disclosed, such disclosure is specifically intended to include the range between the two values regardless of whether they are disclosed with respect to separate examples, and specifically intended to include the range of at least the smaller of the two values and/or no more than the larger of the two values. Additionally, when at least three values of a variable are disclosed, such disclosure is specifically intended to include the range between any two of the values regardless of whether they are disclosed with respect to separate examples, and specifically intended to include the range of at least the A value and/or no more than the B value, where A may be any of the disclosed values other than the largest disclosed value, and B may be any of the disclosed values other than the smallest disclosed value.

Additionally, instances in this specification where one element is "coupled" to another element can include direct and indirect coupling. Direct coupling can be defined as one element coupled to and in some contact with another element. Indirect coupling can be defined as coupling between two elements not in direct contact with each other but having one or more additional elements between the coupled elements. Further, as used herein, securing one element to another element can include direct securing and indirect securing. Additionally, as used herein, "adjacent" does not necessarily denote contact. For example, one element can be adjacent to another element without being in contact with that element.

As used herein, the phrase "at least one of", when used with a list of items, means different combinations of one or more of the listed items may be used and only one of the items in the list may be needed. The item may be a particular object, thing, or category. In other words, "at least one of" means any combination of items or number of items may be used from the list, but not all of the items in the list may be required. For example, "at least one of item A, item B, and item C" may mean item A; item A and item B; item B; item A, item B, and item C; or item B and item C. In some cases, "at least one of item A, item B, and item C" may mean, for example, without limitation, two of item A, one of item B, and ten of item C; four of item B and seven of item C; or some other suitable combination.

Unless otherwise indicated, the terms "first," "second," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, a system, apparatus, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware which enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

The schematic flow chart diagrams included herein are generally set forth as logical flow chart diagrams. As such, the depicted order and labeled steps are indicative of one example of the presented method. Other steps and methods may be conceived that are equivalent in function, logic, or effect to one or more steps, or portions thereof, of the illustrated method. Additionally, the format and symbols employed are provided to explain the logical steps of the method and are understood not to limit the scope of the method. Although various arrow types and line types may be employed in the flow chart diagrams, they are understood not to limit the scope of the corresponding method. Indeed, some arrows or other connectors may be used to indicate only the logical flow of the method. For instance, an arrow may indicate a waiting or monitoring period of unspecified duration between enumerated steps of the depicted method. Additionally, the order in which a particular method occurs may or may not strictly adhere to the order of the corresponding steps shown.

The present subject matter may be embodied in other specific forms without departing from its essential characteristics. The described examples are to be considered in all respects only as illustrative and not restrictive. All changes which come within the meaning and range of the claims are to be embraced within their scope.

The following present further examples:
Example 1. An apparatus (100), comprising:
   a syntactic-foam part (142) comprising low-density spheres (120) at least partially embedded in a resin (138); and
   an elongated member (104) partially embedded in the resin (138) and comprising a first end (106) and a second end (108), wherein at least the first end (106) is located relative to the syntactic-foam part (142) such that the first end (106) is exposed to an exterior (110) of the syntactic-foam part (142) at an exterior surface (112A) of the syntactic-foam part (142).
Example 2. The apparatus (100) according to Example 1, wherein the low-density spheres (120) are hollow or substantially hollow.
Example 3. The apparatus (100) according to Example 1 or Example 2, wherein the first end (106) is one of flush with or proud of the exterior surface (112A).
Example 4. The apparatus (100) according to Example 3, wherein:
   the exterior surface (112A) is a first exterior surface; and
   the second end (108) is located relative to the syntactic-foam part (142) such that the second end (108) is exposed to the exterior (110) of the syntactic-foam part (142) at a second exterior surface (112B) of the syntactic-foam part (142).
Example 5. The apparatus (100) according to Example 4, wherein the first exterior surface (112A) and the second exterior surface (112B) are on a same side of the syntactic-foam part (142).
Example 6. The apparatus (100) according to Example 4, wherein the first exterior surface (112A) is on a side of the syntactic-foam part (142) that is opposite the second exterior surface (112B).
Example 7. The apparatus (100) according to any preceding Example, wherein the elongated member (104) is made of at least one of a metallic material, a ceramic material, or a composite material.
Example 8. The apparatus (100) according to any preceding Example, wherein the elongated member (104) is hollow or substantially hollow so that a thermally conductive fluid is flowable through the elongated member (104) between the first end (106) and the second end (108).
Example 9. The apparatus (100) according to any preceding Example, wherein the elongated member (104) is made of an electrically conductive material.
Example 10. The apparatus (900) according to any preceding Example, wherein:
   the elongated member (104) is a first elongated member (104A);
   the apparatus (900) further comprises a second elongated member (104B) comprising a first second-member end (105) and a second second-member end (107); and
   the first second-member end (105) is located relative to the syntactic-foam part (142) such that the first second-member end (105) is exposed to the exterior (110) of the syntactic-foam part (142).
Example 11. The apparatus (100) according to any preceding Example, wherein the elongated member (104) extends entirely through the syntactic-foam part (142).
Example 12. A system (300), comprising:
   a first syntactic-foam part (142A), comprising a first set of low-density spheres (120) at least partially embedded in a first resin (138A);
   a first elongated member (104A) partially embedded in the first resin (138A) and comprising a first first-member end (106A) and a second first-member end (108A), wherein at least the first first-member end (106A) is located relative to the first syntactic-foam part (142A) such that the first first-member end (106A) is exposed to an exterior (110) of the first syntactic-foam part (142) at an exterior surface (112A) of the first syntactic-foam part;
   a second syntactic-foam part (142B) comprising a second set of low-density spheres (120) at least partially embedded in a second resin (138B); and
   a second elongated member (104B) partially embedded in the second resin (138B) and comprising a first second-member end (106B) and a second second-member end (108B), wherein the second elongated member (104B) is coupled to the first elongated member (104A).
Example 13. The system (300) according to Example 12, wherein the second second-member end (108B) is selectively directly coupled to the first first-member end (106A).
Example 14. The system (400) according to Example 12 or Example 13, further comprising a connector (116), wherein the second second-member end (108B) is indirectly coupled to the first first-member end (106A) via the connector (116), which is engaged with and extends between the second second-member end (108B) and the first first-member end (106A).
Example 15. The system (400) according to Example 14, wherein the connector (116) is at least partially embedded in the first resin (138A).
Example 16. A method (1300) of making a syntactic-foam part (142), the method (1300) comprising:
   loading low-density spheres (120) into a mold (102);
   introducing an elongated member (104) into the mold (102) so that the elongated member (104) is at least partially embedded within the low-density spheres (120);
   introducing a resin (138) into the mold (102);
   embedding the low-density spheres (120), and a portion of the elongated member (104) embedded within the low-density spheres (120), within the resin (138); and
   after embedding the low-density spheres (120), and the portion of the elongated member (104) embedded within the low-density spheres (120), within the resin (138), solidifying the resin (138); and
   removing the low-density spheres (120) and the elongated member (104) from the mold (102).
Example 17. The method of Example 16, further comprising, after solidifying the resin (138), removing the elongated member (104) from the syntactic-foam part (142).
Example 18. The method of Example 16 or Example 17, wherein:
   the elongated member (104) is hollow or substantially hollow and comprises a first end (106) and a second end (108), which are open ends; and
   the method further comprises covering at least one of the first end (106) and the second end (108) after solidifying the resin (138).
Example 19. The method of Example 18, further comprising forming a foam (122) within the elongated member (104) prior to covering the at least one of the first end (106) and the second end (108).
Example 20. The method of any of Examples 16 - 19, wherein:
   the elongated member (104) is hollow or substantially hollow; and
   the method further comprises flowing a thermally conductive fluid (114) through the elongated member (104) while solidifying the resin (138).

## Claims

1. An apparatus (100), comprising:
a syntactic-foam part (142) comprising low-density spheres (120) at least partially embedded in a resin (138); and
an elongated member (104) partially embedded in the resin (138) and comprising a first end (106) and a second end (108), wherein at least the first end (106) is located relative to the syntactic-foam part (142) such that the first end (106) is exposed to an exterior (110) of the syntactic-foam part (142) at an exterior surface (112A) of the syntactic-foam part (142).

2. The apparatus (100) according to claim 1, wherein the low-density spheres (120) are hollow or substantially hollow, and optionally, wherein each of the low-density spheres (120) have a density of between, and inclusive of, 0.005 g/cm³ and 0.6 g/cm³.

3. The apparatus (100) according to claim 1 or claim 2, wherein the first end (106) is one of flush with or proud of the exterior surface (112A).

4. The apparatus (100) according to claim 3, wherein:
the exterior surface (112A) is a first exterior surface; and
the second end (108) is located relative to the syntactic-foam part (142) such that the second end (108) is exposed to the exterior (110) of the syntactic-foam part (142) at a second exterior surface (112B) of the syntactic-foam part (142); and optionally, one of:
the first exterior surface (112A) and the second exterior surface (112B) are on a same side of the syntactic-foam part (142); or
the first exterior surface (112A) is on a side of the syntactic-foam part (142) that is opposite the second exterior surface (112B).

5. The apparatus (100) according to any preceding claim, wherein one or more of:
the elongated member (104) is made of at least one of a metallic material, a ceramic material, or a composite material; and
the elongated member (104) is hollow or substantially hollow so that a thermally conductive fluid is flowable through the elongated member (104) between the first end (106) and the second end (108).

6. The apparatus (100) according to any preceding claim, wherein the elongated member (104) is made of an electrically conductive material.

7. The apparatus (900) according to any preceding claim, wherein:
the elongated member (104) is a first elongated member (104A);
the apparatus (900) further comprises a second elongated member (104B) comprising a first second-member end (105) and a second second-member end (107); and
the first second-member end (105) is located relative to the syntactic-foam part (142) such that the first second-member end (105) is exposed to the exterior (110) of the syntactic-foam part (142).

8. The apparatus (100) according to any preceding claim, wherein the elongated member (104) extends entirely through the syntactic-foam part (142).

9. A system (300), comprising:
a first apparatus (100A), wherein the first apparatus is the apparatus of any preceding claim; and
a second apparatus (100B), wherein the second apparatus is the apparatus of any preceding claim,
wherein the elongated member (104B) of the second apparatus (100B) is coupled to the elongated member (104A) of the first apparatus (100A).

10. The system (300) according to claim 9, wherein the second end (108B) of the second apparatus (100B) is selectively directly coupled to the first end (106A) of the first apparatus (100A).

11. The system (400) according to claim 9 or claim 10, further comprising a connector (116), wherein the second end (108B) of the second apparatus (100B) is indirectly coupled to the first end (106A) of the first apparatus (100A) via the connector (116), which is engaged with and extends between the second end (108B) of the second apparatus (100B) and the first end (106A) of the first apparatus (100A); and optionally,
wherein the connector (116) is at least partially embedded in the resin (138A) of the first apparatus (100A).

12. A method (1300) of making the apparatus (100) of any preceding claim, the method (1300) comprising:
loading (1302) low-density spheres (120) into a mold (102);
introducing (1304) an elongated member (104) into the mold (102) so that the elongated member (104) is at least partially embedded within the low-density spheres (120);
introducing (1306) a resin (138) into the mold (102);
embedding (1308) the low-density spheres (120), and a portion of the elongated member (104) embedded within the low-density spheres (120), within the resin (138);
after embedding the low-density spheres (120), and the portion of the elongated member (104) embedded within the low-density spheres (120), within the resin (138), solidifying (1310) the resin (138) to form the syntactic-foam part (142); and
removing (1312) the syntactic-foam part (142)and the elongated member (104) from the mold (102).

13. The method of claim 12, further comprising, after solidifying the resin (138), removing the elongated member (104) from the syntactic-foam part (142).

14. The method of claim 12 or claim 13, wherein:
the elongated member (104) is hollow or substantially hollow and the first end (106) and the second end (108) are open ends;
the method further comprises covering at least one of the first end (106) and the second end (108) after solidifying the resin (138); and optionally,
the method further comprises forming a foam (122) within the elongated member (104) prior to covering the at least one of the first end (106) and the second end (108).

15. The method of claim 12 or claim 13, wherein:
the elongated member (104) is hollow or substantially hollow; and
the method further comprises flowing a thermally conductive fluid (114) through the elongated member (104) while solidifying the resin (138).
